# FASCICULE DE BREVET EUROPEEN

(11) **EP 2 326 476 B1**
(45) Date de publication et mention de la délivrance du brevet: **23.11.2011**
(21) Numéro de dépôt: 09740414.9
(22) Date de dépôt: 30.07.2009
(51) Int. Cl.: B29C 44/56, B29C 49/64, B29C 49/42, B29C 35/16

(54) **MASSE SPONGIEUSE POUR TRAITER DES FONDS DE RECIPIENTS THERMOPLASTIQUES, INSTALLATION ET UTILISATION DE CETTE MASSE**
SCHWAMMARTIGE MASSE ZUR BEHANDLUNG DER ENDWÄNDE VON THERMOPLASTISCHEN BEHÄLTERN, VORRICHTUNG UND VERWENDUNG DER MASSE
SPONGY MASS FOR TREATING END WALLS OF THERMOPLASTIC CONTAINERS, DEVICE, AND USE OF SAID MASS

(30) Priorité: 31.07.2008 FR 0855283
(43) Date de publication de la demande: 01.06.2011
(73) Titulaire: Sidel Participations, 76930 Octeville sur Mer (FR)
(72) Inventeur: DERRIEN, Mikaël, F-76930 Octeville-sur-mer (FR); FEUILLOLEY, Guy, F-76930 Octeville-sur-mer (FR)
(74) Mandataire: Cabinet Plasseraud
(86) Numéro de dépôt international: PCT/FR2009/051531
(87) Numéro de publication internationale: WO 2010/012958

(56) Documents cités:
- GB-A- 1 304 939
- GB-A- 1 375 041
- US-A- 3 923 936
- US-A- 4 797 310

## Description

La présente invention concerne, d'une façon générale, le domaine de la fabrication des récipients en matière thermoplastique, et elle concerne plus particulièrement le traitement des fonds de récipients en matière thermoplastique, notamment, bien que non exclusivement, en vue du refroidissement des fonds chauds de récipients en matière thermoplastique, telle que le PET, qui sortent d'un moule de soufflage ou d'étirage-soufflage de préformes chaudes dans des moules.

Le fond est la partie des récipients en matière thermoplastique qui est la plus délicate à traiter et qui nécessite le plus d'attention au cours du processus de fabrication.

Par ailleurs, le fond est la partie des récipients qui possède, au moins en partie, l'épaisseur la plus importante (typiquement l'épaisseur du fond, au moins localement, peut être comprise entre une et vingt fois l'épaisseur de la paroi du corps du récipient). Par conséquent, le fond accumule, lors de l'étape de chauffage menée en préalable à l'étape de moulage, une grande quantité de chaleur qui est toujours notablement présente au moment où le récipient achevé est extrait du moule.

Or le fond chaud est mécaniquement très fragile, car la matière thermoplastique encore très chaude peut se déformer ne serait-ce que sous l'action de son propre poids et/ou les contraintes résiduelles liées au procédé de soufflage. Or le respect d'une forme parfaite du fond du récipient garantit la stabilité du récipient posé sur un support plan, et toute déformation du fond compromet cette stabilité et rend le récipient non exploitable commercialement.

Il est donc d'une grande importance que la matière constitutive du fond soit refroidie le plus rapidement possible dès la sortie du récipient achevé hors du moule de manière à figer la forme requise conférée par le moule, et de toute façon il est souhaitable que la forme du fond soit parfaitement figée, et donc la température abaissée, lorsque le récipient atteint le poste de traitement suivant.

Jusqu'à présent, le refroidissement des fonds des récipients sortant de moulage pouvait être obtenu par refroidissement naturel dans l'atmosphère ambiante sur le trajet menant au poste suivant (par exemple une remplisseuse) lorsque ce trajet était d'une durée suffisante (par exemple quelques dizaines de secondes).

Dans certaines installations, on a aussi pu mettre en oeuvre la projection d'un fluide gazeux (en général de l'air) ou d'un liquide (en général de l'eau) pulvérisé sous forme d'un brouillard, éventuellement refroidi, sur les fonds des récipients en cours de défilement à la sortie de l'installation de moulage afin d'accélérer le refroidissement des fonds. Toutefois, ce genre d'aménagement complique la conception structurelle des installations déjà fortement encombrées par ailleurs et en accroît les coûts de fabrication et d'entretien. En outre, les jets de fluide de refroidissement peuvent générer une pollution (apparition de germes ...), tant de l'installation de soufflage que des récipients finaux, ainsi que des perturbations dans des parties voisines de l'installation. De ce fait, on cherche en pratique à éviter de tels aménagements.

Enfin et surtout, les exploitants d'installations de fabrication de récipients thermoplastiques requièrent des vitesses de fonctionnement toujours accrues, et des vitesses de l'ordre de 80 000 récipients/heure sont actuellement envisagées. De plus, la recherche d'installations toujours plus compactes par souci d'économie de surface d'implantation conduit à rapprocher les divers postes de traitement, par exemple entre l'installation de soufflage et l'installation de remplissage qui lui succède. Il en résulte au total un raccourcissement considérable des temps de transit des récipients (par exemple, le temps de transfert des récipients entre l'installation de soufflage et l'installation de remplissage pourrait devenir de l'ordre d'un petit nombre de secondes). Il n'est plus possible, dans de telles conditions, que les fonds des récipients sortant de moulage puissent être refroidis dans les conditions pratiquées jusqu'à présent.

Indépendamment de ce qui vient d'être exposé en relation avec le refroidissement des fonds chauds de récipients thermoplastiques sortant de moulage et qui est d'ordre général dans le contexte de la fabrication des récipients thermoplastiques, il peut aussi être requis, pour certaines productions, l'application d'un produit sous forme fluide, notamment liquide, sur le fond de récipients thermoplastiques non pas pour en abaisser la température comme exposé plus haut, mais au contraire pour en relever la température ou encore pour amener une modification de l'état de surface du fond des récipients. Dans certains cas au moins, une modification de l'état de surface du fond des récipients peut être obtenue par l'application d'un fluide, notamment d'un liquide, approprié sur la face externe dudit fond (par exemple : dépôt d'une couche protectrice contre par exemple des agressions chimiques ; coloration de la face externe des fonds notamment à des fins décoratives ; etc.).

A l'inverse, il peut également être souhaité d'éliminer au moins en grande partie une substance présente sur les fonds des récipients à la suite d'un traitement, par exemple d'éliminer une phase liquide présente sur les fonds à la suite de l'application d'un liquide de refroidissement desdits fonds (essuyage des fonds, séchage des fonds, voir par exemple les documents US 4797310, GB 1 375 041 et US 3 923 936).

L'invention a pour objet de proposer des moyens perfectionnés permettant de traiter des fonds de récipients, en particulier mais non exclusivement en vue de refroidir de façon rapide les fonds de récipients sortant de moulage ou d'essuyer ou sécher les fonds de récipients, et cela dans des conditions de coût et d'encombrement acceptables dans des installations à très grande cadence de production et dans des conditions techniques qui n'entraînent aucune modification ou perturbation dans les processus menés en amont et en aval.

A cet effet, selon un premier de ses aspects l'invention propose une masse spongieuse permettant de traiter des fonds de récipients réalisés dans des installations à très grande cadence de production, ladite masse spongieuse étant propre à être maintenue au contact du fond d'un récipient pendant une durée prédéterminée pour un traitement dudit fond du récipient, ladite masse :
- présentant une face principale de contact avec le fond du récipient ; et
- comportant des rainures borgnes qui s'ouvrent sur ladite face principale et ne sont pas débouchantes à l'opposé et qui sont réparties en deux ensembles de rainures mutuellement transversales qui délimitent des plots.

La masse spongieuse est remarquable en ce que elle est constituée en une mousse souple réticulée à cellules semi-ouvertes et à résilience élevée ; et en ce qu'elle est constituée en mousse de polyuréthane ayant une masse spécifique comprise entre environ 10 et 600 kg/m³.

On comprendra que, dans le contexte de l'invention ainsi exposée, le terme « traitement » doit être compris comme désignant tout apport d'un produit quelconque sur les fonds des récipients ou inversement l'enlèvement au moins partiel d'un produit présent sur les fonds des récipients, et cela par simple mise en contact d'une masse spongieuse présentant une qualité prédéterminée requise, c'est-à-dire en étant respectivement imprégnée dudit produit à apporter ou inversement débarrassée des traces dudit produit à enlever.

De préférence, la mousse de polyuréthane dont est constituée la masse spongieuse est choisie parmi la mousse de polyuréthane polyéther et la mousse de polyuréthane polyester. La masse spécifique est choisie entre environ 10 et 600 kg/m³, pour que la masse spongieuse résiste à des cadences élevées de production, et pour toutefois lui conférer un souplesse suffisante permettant l'écrasement individuel des plots, de sorte à ce que la masse spongieuse épouse au mieux la forme des fond des récipients.

Dans le cadre d'un mode de réalisation avantageux, la masse spécifique la plus appropriée est d'environ 38 kg/m³.

Avantageusement, lesdites rainures ont une profondeur comprise entre environ 7 et 15 mm, de préférence d'environ 10 mm, et en pratique elles peuvent avoir une largeur d'environ 1 mm.

Dans un mode de réalisation concret de fabrication simple, lesdites rainures de chaque ensemble sont mutuellement sensiblement parallèles et les rainures respectivement des deux ensembles sont sensiblement perpendiculaires les unes aux autres.

Dans un exemple pratique de réalisation, lesdits plots sont de forme sensiblement carrée d'environ 15 à 25 mm de côté, de préférence d'environ 19 mm avec lesdites rainures espacées avec un pas d'environ 20 mm.

Toujours dans un exemple pratique de réalisation, la masse spongieuse est, vue en plan, de forme générale sensiblement quadrangulaire, notamment de forme générale sensiblement carrée, et lesdites rainures des deux ensembles sont sensiblement parallèles à ses côtés respectifs.

Pour simplifier le montage et le remplacement par voie d'entretien des masses spongieuses, chaque masse spongieuse peut comporter, dans deux zones mutuellement opposées de la périphérie de sa partie inférieure sous-jacente auxdites rainures, deux gorges latérales sensiblement parallèles creusées dans la paroi latérale sensiblement perpendiculairement auxdites rainures. On peut alors avoir recours à un support en fourche sur les branches duquel la masse spongieuse est tout simplement glissée.

Dans la pratique courante, la face principale de la masse spongieuse peut être sensiblement plane et l'expérience a montré qu'une telle conformation donnait entière satisfaction pour traiter des fonds de toute forme, y compris des formes complexes (fonds dits « pétaloïdes » par exemple). Cependant, en tant que de besoin, la face principale de la masse spongieuse peut, au moins centralement, être bombée en relation avec la forme du fond des récipients (notamment être concave ou convexe selon la forme dudit fond).

Une masse spongieuse agencée conformément à l'invention offre une excellente capacité de déformation, à la fois en amplitude et en surface. Ainsi, si l'on se réfère à l'exemple de réalisation préféré précité avec des rainures d'une profondeur d'environ 10 mm, les plots de la masse spongieuse sont capables de subir un écrasement d'environ 20 mm. Par ailleurs, le découpage de la masse spongieuse en plots indépendants conduit à cet avantage que chaque plot peut subir un écrasement individuel en relation avec la forme spécifique de la portion de surface du fond de récipient au contact de laquelle il est mis, et cela indépendamment des plots avoisinants ; ainsi, la masse spongieuse peut être mise en contact de façon continue avec l'ensemble de la surface du fond de récipient même dans le cas de fond de forme complexe tel qu'un fond pétaloïde par exemple.

Au surplus, les dimensions préférées indiquées dans les exemples de réalisation concrets permettent aux plots de s'écraser de façon individuelle sans pour autant avoir la possibilité de plier et de se mêler les uns aux autres ; on est alors assuré que la masse spongieuse conserve sa forme et donc ses caractéristiques et sa capacité opérationnelle ; également, que chaque plot s'écrase de façon indépendante sur le fond et cela en relation avec la forme locale du fond, l'effort généré sur le fond des récipients est notablement réduit et l'on écarte ainsi tout risque de déformation accidentelle du fond. Cet avantage est d'un intérêt essentiel dans le cas d'un fonctionnement à vitesse très élevée, notamment dans le cas d'une installation telle qu'indiqué ci-après qui doit être en mesure de fonctionner à grande vitesse s'agissant, dans un exemple préféré d'application, d'appliquer un fluide, notamment un liquide, caloporteur sur le fond de récipients successifs en vue du refroidissement des fonds de ceux-ci à la sortie des moules de soufflage à chaud : avec une vitesse de traitement, pour chaque moule, de l'ordre de 1800 récipients par heure, la durée de contact de chaque masse spongieuse avec le fond d'un récipient (subissant une déflexion d'environ 20 mm au contact du fond) ayant une température de sortie de moule qui peut être notamment d'environ 70°C à 85°C est de l'ordre de 0,9 s.

Selon un second de ses aspects, l'invention propose une installation pour le fond d'au moins un récipient en matière thermoplastique, comprenant :
- au moins une masse spongieuse présentant une qualité prédéterminée (c'est-à-dire, comme indiqué plus haut, imprégnée d'un produit à appliquer sur le fond d'un récipient ou inversement débarrassée des traces d'un produit à enlever d'un fond de récipient (par exemple essorée)), et
- des moyens de support propres à maintenir ladite masse spongieuse au contact dudit fond d'au moins un récipient pendant une durée prédéterminée,
   laquelle installation, étant agencée conformément à l'invention, se caractérise en ce que ladite masse spongieuse est constituée comme exposé ci-dessus.

Les dispositions conformes à l'invention peuvent être mises en oeuvre dans une installation de tout type. Cependant, ces dispositions peuvent trouver une application tout particulièrement intéressante en terme de capacité de traitement dans une installation tournante du type carrousel agencée comme il vient d'être exposé et comportant :
- des moyens transporteurs des récipients qui sont mobiles sensiblement circulairement et déplacent les récipients selon une trajectoire sensiblement en arc de cercle entre une entrée et une sortie,
- une pluralité de masses spongieuses supportées les unes à la suite des autres,
- des moyens de support des masses spongieuses respectives disposés sensiblement circulairement et entraînés en rotation sur une trajectoire circulaire sensiblement parallèle et coaxiale à la trajectoire parcourue par les fonds des récipients,
- des moyens d'entraînement propres à déplacer mutuellement lesdits moyens transporteurs des récipients et/ou lesdits moyens de support des masses spongieuses de manière que les fonds des récipients soient mis en contact avec les masses spongieuses respectives sur au moins une partie de la susdite trajectoire en arc de cercle parcourue par les récipients, et
- des moyens de régénération de la qualité prédéterminée des masses spongieuses qui sont disposés dans la partie de ladite trajectoire circulaire située entre la sortie et l'entrée des récipients sur ladite trajectoire.

Dans un mode de réalisation préféré, chaque moyen de support comprend une embase sensiblement plane perforée solidaire de moyens de transfert et une platine de réception d'au moins une masse spongieuse fixée de manière amovible à ladite embase de manière que la masse spongieuse surmonte ladite embase.

Dans le cas où, comme exposé plus haut, la masse spongieuse comporte, dans deux zones mutuellement opposées de la périphérie de sa partie inférieure sous-jacente auxdites rainures, deux gorges latérales sensiblement parallèles creusées dans la paroi latérale sensiblement perpendiculairement auxdites rainures, on peut alors prévoir, pour constituer un agencement simple que ladite platine soit en forme de fourche ayant deux bras engagés respectivement dans les deux gorges latérales de la masse spongieuse. Il est alors intéressant de faire en sorte que chaque moyen de support soit agencé pour supporter deux masses spongieuses côte à côte.

Une installation agencée comme il vient d'être exposé peut aussi être exploitée pour déposer un produit sur les fonds des récipients, notamment un liquide tel qu'un liquide caloporteur (par exemple de l'eau) pour modifier la température (notamment refroidir) desdits fonds, ou pour, au contraire, éliminer au moins en partie un produit présent sur lesdits fonds, par exemple pour éliminer (séchage au moins partiel) un liquide tel que de l'eau pouvant résulter d'une étape préalable, par exemple une étape de refroidissement desdits fonds à la sortie des moules de soufflage.

Grâce aux dispositions qui viennent d'être exposées, il est possible de réaliser une installation capable de répondre aux attentes des utilisateurs en terme de vitesse de fonctionnement, en terme de qualité du résultat obtenu et en terme de simplification de l'entretien notamment pour le remplacement des masses spongieuses par voie d'entretien.

Enfin, l'invention vise une utilisation d'une masse spongieuse telle que définie ci-dessus, pour le traitement de fonds de récipients réalisés dans des installations à très grande cadence de production.

Le traitement peut être une application de produit ou un essuyage (retrait de produit).

L'invention sera mieux comprise à la lecture de la description détaillée qui suit de certains modes de réalisation donnés uniquement à titre d'exemples nullement limitatifs. Dans cette description, on se réfère aux dessins annexés sur lesquels :
- la figure 1A est une vue très schématique illustrant les dispositions générales d'un exemple possible d'application visée par l'invention avec mise en oeuvre d'une masse spongieuse conforme à l'invention ;
- la figure 1B est une vue très schématique, analogue à celle de la figure 1A, illustrant les dispositions générales d'un exemple possible d'application préférée des dispositions montrées à la figure 1A ;
- la figure 2 est une vue en perspective de dessus d'une masse spongieuse agencée conformément à l'invention ;
- la figure 3 est une vue de dessus d'une installation tournante du type carrousel incorporant une pluralité de masses spongieuses conformes à l'invention, pour une mise en oeuvre concrète des dispositions de la figure 1 ; et
- les figures 4A et 4B sont deux vues en perspective de dessus d'un agencement de support de masses spongieuses conformes à l'invention susceptible d'être exploité dans l'installation de la figure 3, la figure 4B étant une vue éclatée de l'agencement assemblé de la figure 4A.

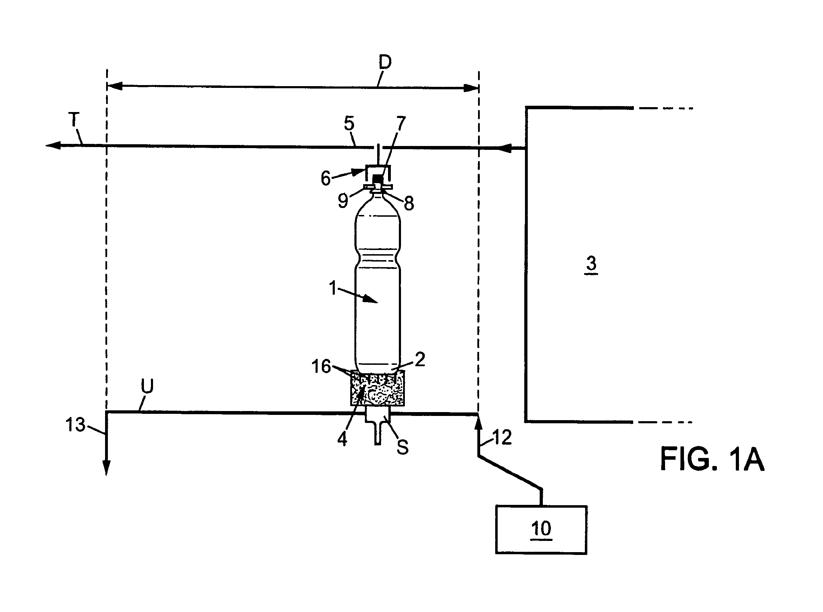

En se reportant tout d'abord à la figure 1A, il y est illustré très schématiquement un mode possible de mise en oeuvre d'un procédé pour appliquer un fluide sur le fond 2 d'au moins un récipient 1, notamment d'une bouteille, en matière thermoplastique telle que du PET. Dans l'application plus particulièrement envisagée dans le cadre de l'invention, mais qui n'est pas exclusive, il s'agit d'appliquer sur le fond 2 du récipient un fluide caloporteur, à température appropriée et éventuellement additionné d'un adjuvant, pour modifier la température dudit fond 2 ; plus spécifiquement, il peut s'agir d'appliquer un fluide de refroidissement sur le fond 2 du récipient en sortie du moule de soufflage afin de refroidir rapidement la matière dudit fond afin de stabiliser la forme de celui-ci.

Dans ce contexte, on amène en contact mutuel le fond 2 dudit au moins un récipient 1 et une masse 4 spongieuse imprégnée dudit fluide et on maintient, grâce à un support S approprié, ce contact pendant une durée prédéterminée.

Dans une mise en oeuvre industrielle du procédé de l'invention qui n'est cependant pas exclusive, le récipient 1 est entraîné en déplacement sur une trajectoire T prédéterminée (schématisée par la flèche T), en étant pris en charge par des moyens transporteurs, schématisés en 5 à la figure 1A ; on a supposé, dans la représentation de la figure 1A que le récipient 1 était supporté par un organe 6 à pinces comportant des pinces 9 engagées autour du col 7 du récipient 1, au-dessus d'une collerette 8, entre celle-ci et un filetage de fixation d'un bouchon placé au niveau dudit col 7, et que ledit organe 6 à pinces est lui-même supporté par les moyens 5 transporteurs. Pour simplifier la représentation et bien que cela ne soit pas techniquement lié à l'invention, le procédé de l'invention est illustré à la figure 1A comme étant mis en oeuvre dans une partie sensiblement rectilinéaire de la trajectoire T.

De son côté, la masse 4 spongieuse est entraînée en déplacement sensiblement à la même vitesse que le récipient 1 sur une trajectoire U (schématisée par la flèche U) de longueur D limitée, sensiblement parallèle à celle T du récipient 1, en même temps qu'elle est appliquée au contact du fond 2 du récipient 1 pendant ladite durée prédéterminée.

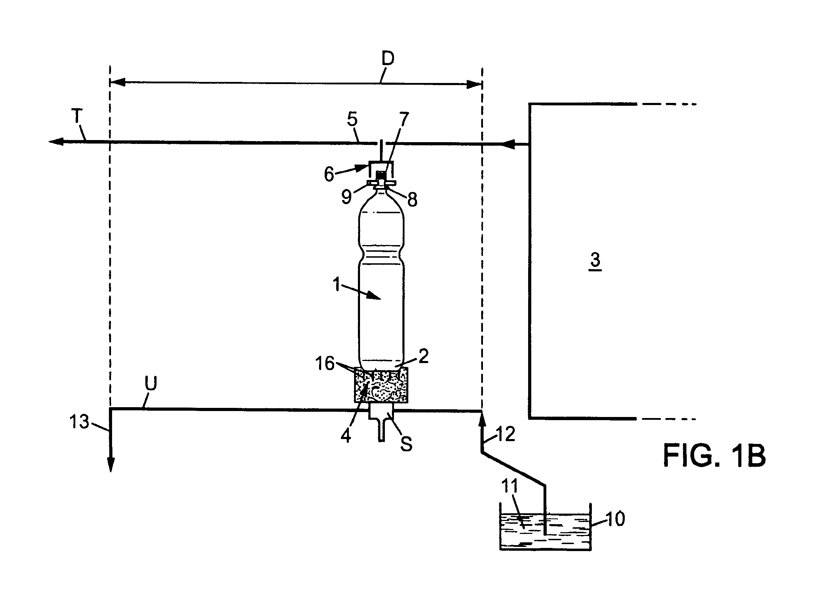

Il faut souligner que l'application de la masse 4 spongieuse contre le fond 2 du récipient 1 se traduit par un effort de poussée exercé contre le fond 2 du récipient sensiblement selon l'axe de celui-ci, c'est-à-dire sensiblement verticalement du bas vers le haut dans la configuration, montrée à la figure 1, de récipients transportés en position sensiblement verticale col en haut. Il en résulte que, malgré la présence de la collerette, il est nécessaire que l'organe 6 à pinces enserre le col 7 du récipient 1 de façon positive afin de bloquer le récipient verticalement.

Dans la représentation schématique qui est donnée à la figure 1A, on a supposé que la masse 4 spongieuse était à cet effet imprégnée au moins partiellement de fluide frais ayant les caractéristiques souhaitées en un emplacement (par exemple dans une enceinte) 10 (schématisé sur la figure 1A sous forme d'un bloc). Une fois imprégnée de fluide frais de toute manière appropriée dont des exemples seront donnés plus loin, la masse 4 spongieuse est soulevée depuis l'emplacement 10 (flèche 12), puis appliquée contre le fond 2 du récipient 1 au moment où celui-ci se présente à son aplomb.

La masse 4 spongieuse accompagne alors ledit fond 2 tout au long du déplacement du récipient 1 sur une portion D donnée de ladite trajectoire T correspondant, en relation avec la vitesse de déplacement du récipient 1, à un temps de contact prédéterminé devant conduire avec l'obtention de l'effet recherché sur ledit fond. Au terme de ladite portion donnée de la trajectoire T, la masse spongieuse est écartée du fond 2 (flèche 13), tandis que le récipient 1 entraîné par les moyens 5 transporteurs poursuit sa course. La masse 4 spongieuse, dans laquelle le fluide peut avoir disparu au moins en partie (par exemple présence ou apparition d'une phase liquide qui a dégouttée) et peut avoir éventuellement perdu tout ou partie de ses caractéristiques au contact du fond 2, peut ensuite être ramenée à son point de départ vers l'emplacement 10 où elle est à nouveau rechargée en fluide frais, en attendant l'arrivée d'un autre récipient 1.

Bien que les dispositions générales qui viennent d'être exposées puissent être mises en oeuvre avec un fluide qui serait un gaz, il semble toutefois que la mise en oeuvre la plus simple et la plus efficace d'une masse spongieuse conforme à l'invention consiste en ce que le fluide soit un liquide. C'est cet exemple qui est illustré à la figure 1B (qui est analogue à la figure 1A prise en considération plus haut), dans lequel l'emplacement 10 précité peut se présenter sous forme d'un réservoir également référencé 10 qui contient un liquide 11. Au cours du cycle, la masse 4 spongieuse est donc par exemple immergée dans le réservoir 10, puis extraite de celui-ci pour être mise en contact avec le fond 2 d'un récipient, puis finalement ramenée au réservoir 10 pour être rechargée en liquide 11.

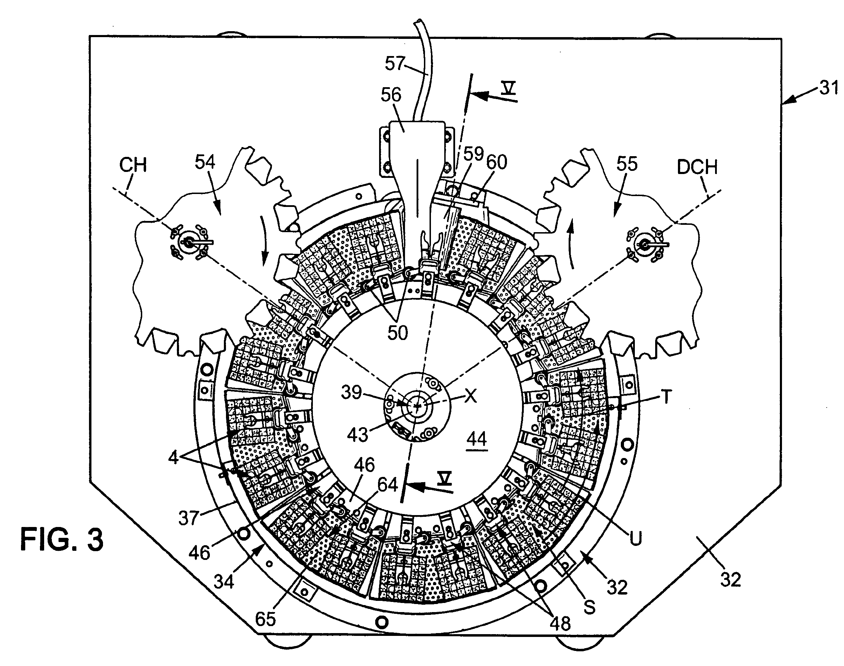

Bien entendu, il ne s'agit là que d'un exemple de mise en oeuvre destiné à faciliter la compréhension et l'on peut avoir recours en pratique à d'autres solutions pour charger la masse 4 spongieuse en liquide frais (une autre solution sera exposée plus loin, en regard de la figure 3).

On remarquera que, dans les exemples illustrés aux figures 1A et 1B, les moyens 5 transporteurs sont représentés comme déplaçant les récipients 1 selon une trajectoire T à niveau sensiblement constant, tandis que c'est la masse 4 spongieuse qui est soulevée pour être amenée contre le fond 2 des récipients 1 successifs. Mais on peut avoir recours à d'autres solutions (par exemple déplacement de la masse spongieuse à niveau constant et conférer au récipient une composante de déplacement vertical pour amener son fond en appui contre la masse spongieuse, puis l'en séparer).

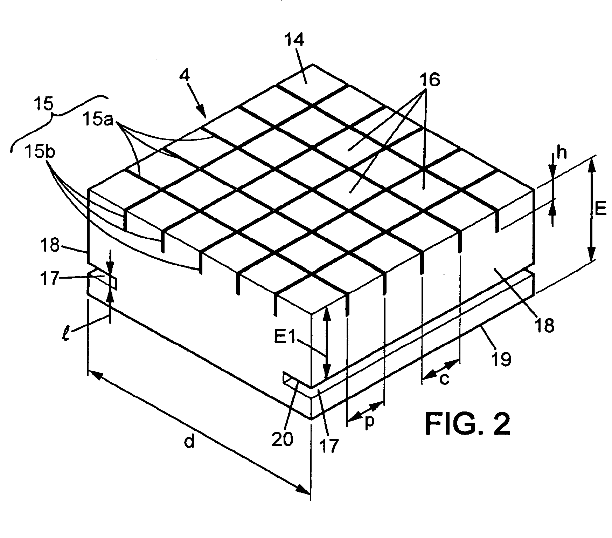

A la figure 2 est illustrée une masse 4 spongieuse agencée conformément à l'invention.

La masse 4 spongieuse est constituée en une mousse souple réticulée à cellules semi-ouvertes et à résilience élevée (mousse technique alvéolaire). Il peut s'agir de préférence d'une mousse de polyuréthane, notamment d'une mousse de polyuréthane polyéther ou d'une mousse de polyuréthane polyester, ayant une masse spécifique comprise entre environ 10 et 600 kg/m³, de préférence d'environ 38 kg/m³. Avantageusement, au moins dans le cadre de l'application préférée évoquée plus haut, cette mousse est de couleur blanche. Compte tenu des conditions d'emploi prévues, cette mousse peut de préférence présenter un point d'éclair compris entre 315°C et 370°C, une température de décomposition supérieure à 180°C, et posséder une énergie thermique de l'ordre de 28 000 kJ/kg. Une mousse du type indiqué ci-dessus est par exemple commercialisée en France par la Société RECTICEL FRANCE SAS.

Grâce à ces dispositions, on est en mesure d'assurer à une masse spongieuse ainsi constituée une longue durée de vie lui permettant, dans le cadre de l'application plus spécialement envisagée plus haut, de supporter un nombre élevé de cycles compression/relâchement pour son essorage lorsque la masse spongieuse a besoin d'être vidée au moins en partie d'une phase liquide qu'elle contient (typiquement de l'ordre de 1,5 millions de cycles correspondant à une capacité de production de l'ordre de 1800 récipients par heure et par moule dans une installation pouvant comporter jusqu'à environ 46 moules, pendant une durée de l'ordre de 35 jours).

Comme cela apparaît clairement sur la figure 2, la masse 4 spongieuse conforme à l'invention présente une face 14 principale de contact avec le fond 2 du récipient (face supérieure dans la configuration d'utilisation illustrée à la figure 1) et elle comporte deux ensembles de rainures 15 borgnes mutuellement transversales qui s'ouvrent sur ladite face principale et ne sont pas débouchantes à l'opposé. Les rainures 15 appartenant à ces deux ensembles sont désignées respectivement par des références numériques 15a, 15b et elles délimitent des plots 16. Cette configuration en plots de la partie de la masse 4 spongieuse destinée à être appliquée contre le fond 2 des récipients 1 confère à cette partie une capacité de déformation (écrasement) relativement homogène sur toute la face 14 de sorte qu'on est ainsi assuré d'une mise en contact de la masse spongieuse sur toute la surface du fond.

Dans un exemple pratique de réalisation, les rainures 15 ont une profondeur h comprise entre environ 7 et 15 mm, de préférence d'environ 10 mm, et la masse spongieuse a une capacité d'écrasement d'environ 20 mm.

La caractéristique essentielle des plots réside dans leur capacité à s'écraser beaucoup plus que dans leur forme propre qui, en principe, pourrait être quelconque. Toutefois, la fabrication d'une telle masse spongieuse, et en particulier la formation des rainures, semble devoir se trouver simplifiée lorsque les rainures 15a, respectivement 15b de chaque ensemble sont mutuellement sensiblement parallèles et que les rainures 15a, 15b respectivement des deux ensembles sont sensiblement perpendiculaires les unes aux autres comme illustré à la figure 2.

Il est également nécessaire de dimensionner les plots de manière qu'ils aient la capacité à s'écraser individuellement sans entraînement des plots voisins, qu'également leur surface individuelle soit suffisamment petite pour que l'ensemble des plots puisse épouser une forme de fond complexe telle que celle d'un fond pétaloïde, mais que par contre leur surface individuelle ne soit pas trop petite pour éviter que les plots soient par trop flexibles et éviter qu'ils puissent se courber et se mêler les uns les autres en formant des masses nouées qui détruiraient les capacités fonctionnelles de la masse spongieuse.

Dans un exemple concret de réalisation montré à la figure 2, les plots 16 sont de forme sensiblement carrée d'environ 15 à 25 mm de côté (c), typiquement d'environ 19 mm de côté avec un pas p d'espacement d'environ 20 mm (soit des rainures d'environ 1 mm de largeur).

La masse 4 spongieuse elle-même peut avoir n'importe quelle forme qui pourra être adaptée en relation avec ses conditions d'emploi. Dans le contexte de l'application préférée plus spécialement évoquée plus haut, la masse 4 spongieuse peut présenter, vue en plan, une forme générale sensiblement quadrangulaire et les rainures 15a, 15b respectivement des deux ensembles peuvent alors être sensiblement parallèles à ses côtés respectifs. Dans l'exemple de réalisation concret illustré à la figure 2, la masse 4 spongieuse est, vue en plan, de forme générale sensiblement carrée, d'environ 118 mm de côté (d), avec une épaisseur E de l'ordre de 40 à 50 mm.

Pour assurer le support et le blocage de la masse 4 spongieuse sur son support S conformé sous forme d'un support à fourche comme cela sera exposé de façon plus détaillé plus loin, il peut être envisagé que la masse 4 spongieuse comporte, dans deux zones mutuellement opposées de la périphérie de sa partie inférieure sous-jacente auxdites rainures 15, deux gorges 17 latérales sensiblement parallèles creusées dans la paroi latérale sensiblement perpendiculairement auxdites rainures 15. Dans la configuration de la masse spongieuse de forme sensiblement parallélépipédique illustrée à la figure 2, les deux gorges 17 sont creusées dans deux faces 18 latérales opposées de la masse 4 spongieuse, au voisinage de la partie inférieure de celle-ci. De façon pratique, la masse 4 spongieuse ayant une épaisseur E de l'ordre de 50 mm, les gorges 17 ont une largeur 1 d'environ 2 mm et leur face 20 supérieure se situe à environ 10 mm de la face inférieure 19 de la masse 4 spongieuse. Il en résulte que l'épaisseur E1 utile de la masse 4 spongieuse (c'est-à-dire l'épaisseur capable d'être écrasée, plots compris) est d'environ 40 mm, ce qui suffit pour autoriser la déflexion de l'ordre de 20 mm mentionnée plus haut.

Selon les essais qui ont été faits, il a été constaté que les résultats attendus pouvaient être atteints, y compris avec des fonds 2 de forme complexe (par exemple fonds pétaloïdes) en donnant à la face 14 principale de la masse 4 spongieuse une conformation sensiblement plane comme montré à la figure 2. Toutefois, en tant que de besoin, la face principale de la masse spongieuse peut, au moins centralement, être conformée différemment ; notamment, elle peut par exemple être bombée (soit convexe, soit concave) en relation avec la forme du fond 2 des récipients.

A la figure 3 est représentée, en vue de dessus, une installation, du type carrousel tournant autour d'un axe X, qui est agencée pour une mise en oeuvre des dispositions générales exposées plus haut en regard des figures 1A et 1B, étant entendu ici encore que les dispositions propres à la présente invention pourraient être exploitées dans une installation de conception différente, par exemple dans laquelle ce sont les récipients qui sont déplacés verticalement pour être amenés au contact des masses spongieuses circulant à niveau constant).

L'installation, désignée dans son ensemble par la référence 31, comprend un bâti 32 en forme générale de plateau sensiblement horizontal et sensiblement transversal à l'axe X.

Le bâti 32 supporte, par des moyens de support non visibles sur la figure 3, une goulotte ou gouttière 34 sensiblement annulaire et sensiblement coaxiale à l'axe X, et dont seule la paroi 37 extérieure annulaire est visible sur le dessin. La gouttière 32 est fixe en rotation.

Un arbre 39 coaxial à l'axe X peut être entraîné en rotation, par son extrémité inférieure saillant sous le bâti 32, par des moyens de transmission (par exemple une poulie entraînée par une courroie) raccordés à un moyen d'entraînement (non montré).

A son extrémité 43 supérieure, l'arbre 39 supporte un tambour 44 discoïdal qui supporte des ensembles 48 de pince propres à saisir des cols 7 de récipients 1. La commande d'ouverture et de fermeture des pinces des ensembles 48 à pince peut être assurée par des moyens de commande à came (non visible) et galet(s) 50 suiveur(s), comme cela est bien connu de l'homme de métier.

Dans ces conditions, les récipients 1 défilent les uns à la suite des autres selon une trajectoire T prédéterminée qui est sensiblement en arc de cercle de rayon prédéterminé comme symbolisé par une flèche à la figure 3.

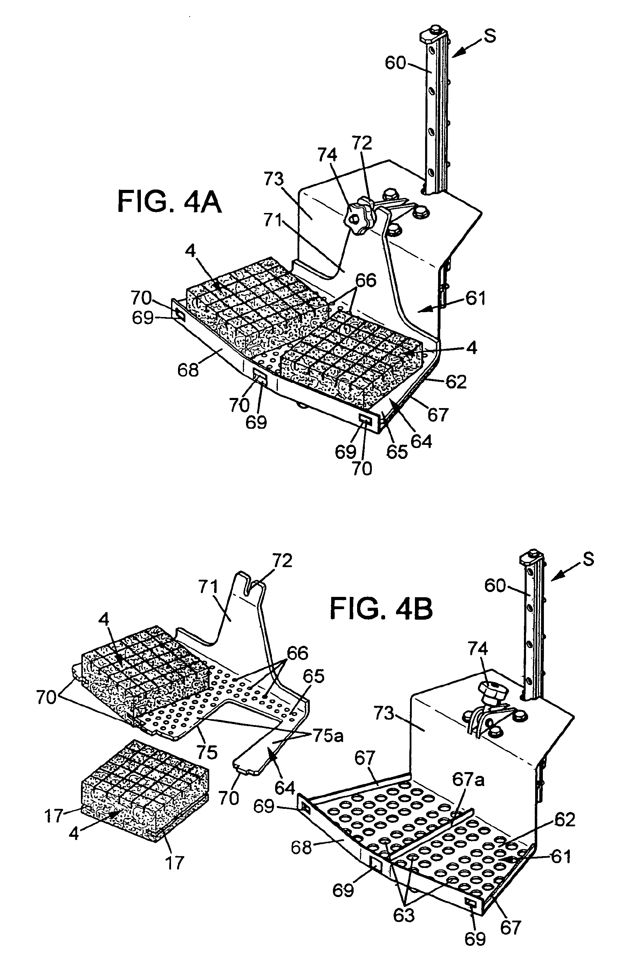

Les moyens S de support des masses 4 spongieuses comprennent une couronne 46 sensiblement coaxiale à l'axe X qui supporte à sa périphérie, par des moyens qui seront détaillés plus loin en regard des figures 4A, 4B, un ensemble de masses 4 spongieuses réparties circulairement à intervalle angulaire constant les unes des autres. La couronne 46 est supportée à libre rotation par les moyens de support de la gouttière 34.

On soulignera que chaque ensemble 48 à pince est aligné verticalement avec une masse 4 spongieuse.

Dans ces conditions, les masses 4 spongieuses défilent les unes à la suite des autres selon une trajectoire U (symbolisée par une flèche à la figure 3) sensiblement circulaire qui possède un rayon sensiblement égal audit rayon prédéterminé et qui s'étend sensiblement parallèlement et sensiblement coaxialement à ladite trajectoire T prédéterminée des récipients 1, lesdites masses 4 spongieuses étant déplacées en rotation en synchronisme avec lesdits récipients 1 sous les fonds 2 respectifs de ceux-ci.

On précisera également que, dans ce mode de réalisation, les moyens S de support des masses 4 spongieuses sont agencés pour soulever les masses spongieuses afin de les amener au contact des fonds des récipients 1 en début de traitement et pour abaisser les masses spongieuses afin de les écarter desdits fonds en fin de traitement. Ces déplacements de soulèvement et d'abaissement peuvent être commandés par des moyens classiques à came fixe et galets suiveurs (non visibles sur la figure 3) couramment mis en oeuvre dans ce domaine.

Le fonctionnement de l'installation exposée ci-dessus est le suivant.

Comme représenté à la figure 3, une roue 54 de transfert d'entrée amène les récipients 1 jusqu'au droit d'un axe CH de chargement où ils sont saisis respectivement par les moyens 48 à pince précité. A cet endroit, les fonds 2 des récipients 1 sont situés au-dessus des masses 4 spongieuses respectives.

Les masses 4 spongieuses sont ensuite soulevées de telle sorte que les fonds 2 des récipients 1 soient forcés au contact des masses 4 spongieuses respectives. Chaque récipient est alors transporté dans cette position sur une majeure partie de la trajectoire circulaire, jusqu'à parvenir au droit d'un axe de déchargement DCH où il est saisi par une roue 55 de transfert de sortie. Si l'on prend en compte les temps de mise en contact, puis de séparation des masses 4 spongieuses et des fonds 2 des récipients 1, la distance D de maintien en contact évoquée plus haut est un peu inférieure (en raison des temps de chargement et de déchargement) à la distance angulaire (considérée dans le sens de rotation) entre les axes CH et DCH.

Les dégoulinures (condensation au contact des fonds, application d'un liquide) des masses 4 spongieuses comprimées tombent dans la gouttière 34. Un agencement approprié de celle-ci (par exemple mise en oeuvre d'une pompe, ou plus simplement inclinaison de son fond 35) permet d'évacuer le liquide ainsi recueilli et de le diriger vers un réservoir (non montré), où il peut être retraité et/ou reconditionné par exemple thermiquement pour être recyclé dans le cas où l'installation est plus spécifiquement destinée à appliquer un liquide sur les fonds des récipients. Cette évacuation se situe alors dans l'intervalle angulaire entre les axes CH de chargement et DCH de déchargement précités.

Le chargement des masses 4 spongieuses en fluide, notamment en liquide, frais s'effectue également dans l'intervalle angulaire compris entre les axes DCH de déchargement et CH de chargement précités.

A cet effet, dans le cas où le fluide est un liquide, car c'est ce contexte que l'invention semble devoir trouver ses applications les plus courantes (par exemple refroidissement des fonds des récipients), on peut prévoir de pulvériser du liquide frais au-dessus de la trajectoire suivie par les masses 4 spongieuses. Ainsi, dans ledit intervalle angulaire (considéré dans le sens de rotation) entre les axes CH de chargement et DCH de déchargement, on prévoit une potence 56, de préférence supportée de façon fixe par les moyens de support de la gouttière 34, qui s'étend radialement au-dessus de la gouttière 34. La potence 56 supporte au moins un conduit 57 d'alimentation en liquide frais, lequel conduit 57 peut être muni d'une buse ou rampe de pulvérisation du liquide sur les masses 4 spongieuses qui défilent en dessous de manière à recharger celles-ci.

Il peut également être avantageux de prévoir, immédiatement en amont de la potence 56, des moyens d'essorage des masses 4 spongieuses, par exemple sous forme d'un rouleau 59 situé radialement de manière à écraser les masses spongieuses et supporté à libre rotation par un flasque 60 monté sur la potence 56 ou sur la paroi 37 extérieure de la gouttière 34 comme montré à la figure 3.

De même, dans le cas où l'installation est destinée à sécher (c'est-à-dire pomper une phase liquide) au moins en partie les fonds des récipients à l'aide de masses spongieuses essorées, on pourra avoir recours, pour traiter les masses spongieuses venant de s'imprégner de liquide au contact des fonds des récipients, à des moyens d'essorage qui peuvent être agencés comme il vient d'être exposé.

Dans le cas où les masses spongieuses ont été appliquées contre les fonds des récipients pour les débarrasser d'un produit (par exemple des traces de produit séché ou des traces pulvérulentes), on pourra faire passer, à l'emplacement précité, les masses spongieuses dans un bain liquide ou sous une douche, puis les essorer comme indiqué.

Pour étendre le domaine d'utilisation de l'installation qui vient d'être décrite, il est souhaitable qu'elle puisse traiter des récipients de diverses conformations, et notamment de diverses hauteurs, étant entendu que, pour éviter des projections de liquide, les fonds des récipients 1 et les masses 4 spongieuses respectives doivent tourner en demeurant au voisinage immédiat de la gouttière 34. A cette fin, il est avantageux de rendre déplaçable verticalement l'ensemble de la gouttière 34 et de la couronne 46 portant les masses 4 spongieuses. De nombreuses solutions techniques sont à la disposition de l'homme du métier. Le détail de cet agencement, qui n'offre pas de lien direct avec l'objet de la présente invention, ne sera pas décrit.

En se reportant aux figures 4A et 4B, on va maintenant décrire un exemple de réalisation actuellement préféré d'une partie des moyens S de support des masses 4 spongieuses.

Une potence 60 (qui peut supporter, notamment à son extrémité inférieure, un galet suiveur coopérant avec une came fixe, non visibles sur les figures 3, 4A et 4B, de manière que cette potence soit déplacée verticalement pour commander le positionnement de la masse spongieuse au contact du fond de récipient ou en être écartée au cours d'un cycle) est solidaire à son extrémité supérieure de moyens de transfert formés par la couronne 46 précitée.

La potence 60 supporte une embase 61 dont une partie au moins est conformée sensiblement en un plateau 62 approximativement horizontal. Le plateau 62 est perforé d'une multiplicité de trous 63 et forme un caillebotis à travers lequel un éventuel liquide dégouttant de la masse spongieuse peut s'écouler facilement dans la gouttière 34 sous-jacente.

Une platine 64 de réception d'au moins une masse 4 spongieuse est fixée de manière amovible à ladite embase 61 de manière que la masse spongieuse surmonte ladite embase 61. La platine 64 est conformée au moins en partie sous forme d'une plaque 65 sensiblement horizontale et elle aussi perforée d'une multiplicité de trous 66 pour faciliter l'écoulement du liquide.

Pour simplifier la fabrication de l'embase 61 et de la platine 64, les trous 63 et les trous 66 peuvent ne pas avoir les mêmes dimensions et/ou formes et/ou ne pas être à l'aplomb les uns des autres. Pour malgré tout permettre un écoulement facile du liquide, on prévoit d'écarter la plaque 65 de la platine 64 au-dessus du plateau 62 de l'embase 61. A cet effet, le plateau 62 est bordé latéralement par des rebords 67 sur lesquels reposent les bords respectifs de la plaque 65, une ou plusieurs nervures saillantes 67a pouvant éventuellement être également prévues sur le plateau 62.

Pour ce qui est de l'assemblage de la platine 64 à l'embase 61, on peut prévoir que le plateau comporte frontalement une jupe 68 verticale tournée vers le haut et munie de lumières 69 propres à recevoir des pattes 70 d'encliquetage prévues sur le bord frontal de la plaque 65. A l'opposé, on peut prévoir des moyens de solidarisation rapides, par exemple sous forme d'une vis basculante comme montré aux figures 4A et 4B. A cet effet, la platine 64 peut présenter une partie 71 relevée vers le haut qui est munie d'une encoche 72 et qui est propre à venir au contact d'une partie 73, relevée vers le haut de façon correspondante, de l'embase 61 ; cette dernière supporte une vis 74 basculante qui, en position de montage de la platine 64 sur l'embase 61, vient s'engager dans l'encoche 72 et, après serrage, bloque la platine 64 sur l'embase 61. On constitue ainsi des moyens d'assemblage simples à fabriquer et faciles et rapides à manoeuvrer.

Enfin, la plaque 65 est évidée dans sa partie centrale par un évidement 75 qui débouche sur le bord frontal de ladite plaque, de sorte que la plaque 65 présente l'aspect général d'une fourche avec deux bras 75a comme visible à la figure 4B. Dans ces conditions, la masse 4 spongieuse est agencée comme exposé plus haut avec deux gorges 17 latérales qui se glissent sur lesdits deux bras 75a respectifs comme visible à la figure 4A.

On peut encore accélérer le processus de remplacement des masses 4 spongieuses par voie d'entretien en prévoyant que chaque moyen S de support soit agencé pour supporter deux masses 4 spongieuses côte à côte, comme illustré sur les figures 4A et 4B. Un tel agencement permet également de simplifier la structure de support et de commande de déplacement des masses 4 spongieuses dans un endroit de l'installation qui est particulièrement encombré.

Bien entendu, les moyens qui viennent d'être exposés n'ont été indiqués qu'à titre d'exemple nullement limitatifs et l'homme du métier est en mesure de déterminer de nombreuses variantes de réalisation ne sortant pas du cadre des revendications ci-après.

## Revendications

1. Masse (4) spongieuse permettant de traiter des fonds de récipients réalisés dans des installations à très grande cadence de production, ladite masse étant propre à être maintenue au contact du fond (2) d'un récipient (1) pendant une durée prédéterminée pour un traitement dudit fond (2) du récipient, ladite masse :
- présentant une face (14) principale de contact avec le fond (2) du récipient ;
- comportant des rainures (15) borgnes qui s'ouvrent sur ladite face (14) principale et ne sont pas débouchantes à l'opposé et qui sont réparties en deux ensembles de rainures (15a, 15b) mutuellement transversales qui délimitent des plots (16) et ;
- étant constituée en une mousse souple réticulée à cellules semi-ouvertes et à résilience élevée
**caractérisée en ce qu'**elle est constituée en mousse de polyuréthane ayant une masse spécifique comprise entre environ 10 et 600 kg/m³.

2. Masse (4) spongieuse selon la revendication 1, **caractérisée en ce qu'**elle est constituée en mousse de polyuréthane ayant une masse spécifique d'environ 38 kg/m³.

3. Masse (4) spongieuse selon la revendication 1 ou 2, **caractérisée en ce qu'**elle est constituée en mousse de polyuréthane choisie parmi la mousse de polyuréthane polyéther et la mousse de polyuréthane polyester.

4. Masse (4) spongieuse selon l'une quelconque des revendications 1 à 3, **caractérisée en ce que** lesdites rainures (15) ont une profondeur comprise entre environ 7 et 15 mm.

5. Masse (4) spongieuse selon la revendication 4, **caractérisée en ce que** lesdites rainures (15) ont une profondeur (h) d'environ 10 mm.

6. Masse (4) spongieuse selon la revendication 4, **caractérisée en ce que** lesdites rainures (15) ont une largeur d'environ 1 mm.

7. Masse (4) spongieuse selon l'une quelconque des revendications 1 à 6, **caractérisée en ce que** lesdites rainures (15a, 15b) de chaque ensemble sont mutuellement sensiblement parallèles et **en ce que** les rainures (15a, 15b) respectivement des deux ensembles sont sensiblement perpendiculaires les unes aux autres.

8. Masse (4) spongieuse selon la revendication 7, **caractérisée en ce que** lesdits plots (16) sont de forme sensiblement carrée d'environ 15 à 25 mm de côté.

9. Masse (4) spongieuse selon la revendication 8, **caractérisée en ce que** lesdits plots (16) ont environ 19 mm de côté et **en ce que** lesdites rainures (15) sont espacées avec un pas d'environ 20 mm.

10. Masse (4) spongieuse selon l'une quelconque des revendications 1 à 9, **caractérisée en ce qu'**elle est, vue en plan, de forme générale sensiblement quadrangulaire et **en ce que** lesdites rainures (15a, 15b) des deux ensembles sont sensiblement parallèles à ses côtés respectifs.

11. Masse (4) spongieuse selon la revendication 10, **caractérisée en ce qu'**elle est, vue en plan, de forme générale sensiblement carrée.

12. Masse (4) spongieuse selon l'une quelconque des revendications 1 à 11, **caractérisée en ce qu'**elle comporte, dans deux zones mutuellement opposées de la périphérie de sa partie inférieure sous-jacente auxdites rainures (15), deux gorges (17) latérales sensiblement parallèles creusées dans les parois (18) latérales de ladite masse (4) spongieuse, sensiblement perpendiculairement auxdites rainures (15).

13. Masse (4) spongieuse selon l'une quelconque des revendications 1 à 12, **caractérisée en ce que** la face (14) principale de la masse (4) spongieuse est sensiblement plane.

14. Masse (4) spongieuse selon l'une quelconque des revendications 1 à 12, **caractérisée en ce que** la face (14) principale de la masse (4) spongieuse est, au moins centralement, bombée en relation avec la forme du fond (2) des récipients.

15. Installation pour traiter un fond (2) d'au moins un récipient (1) en matière thermoplastique, comprenant :
- au moins une masse (4) spongieuse présentant une qualité prédéterminée, et
- des moyens (S) de support propres à maintenir ladite masse (4) spongieuse au contact dudit fond (2) d'au moins un récipient (2) pendant une durée prédéterminée, **caractérisée en ce que** ladite masse (4) spongieuse est constituée selon l'une quelconque des revendications 1 à 14.

16. Installation selon la revendication 15, **caractérisée en ce qu'**elle comporte :
- des moyens (44) transporteurs des récipients (1) qui sont mobiles sensiblement circulairement et déplacent les récipients (1) selon une trajectoire (T) sensiblement en arc de cercle entre une entrée (CH) et une sortie (DCH),
- une pluralité de masses (4) spongieuses supportées les unes à la suite des autres,
- des moyens (S) de support des masses (4) spongieuses respectives disposés sensiblement circulairement et entraînés en rotation sur une trajectoire (U) circulaire sensiblement parallèle et coaxiale à la trajectoire (T) parcourue par les fonds (2) des récipients (1),
- des moyens d'entraînement propres à déplacer mutuellement lesdits moyens (44) transporteurs des récipients (1) et/ou lesdits moyens (S) de support des masses (4) spongieuses de manière que les fonds (2) des récipients soient mis en contact avec les masses (4) spongieuses respectives sur au moins une partie de la susdite trajectoire (T) en arc de cercle parcourue par les récipients (1), et
- des moyens (56-60) de régénération de la qualité prédéterminée des masses (4) spongieuses qui sont disposés dans la partie de ladite trajectoire (T) circulaire située entre la sortie (DCH) et l'entrée (CH) des récipients (1) sur ladite trajectoire (T).

17. Installation selon la revendication 16, **caractérisée en ce que** chaque moyen (S) de support comprend une embase (61) sensiblement plane perforée (63) solidaire de moyens de transfert et une platine (64) de réception d'au moins une masse (4) spongieuse, ladite platine (64) étant fixée de manière amovible à ladite embase (61).

18. Installation selon la revendication 17, **caractérisée en ce que** la masse (4) spongieuse est agencée selon la revendication 13 et **en ce que** ladite platine (64) est en partie au moins en forme de fourche ayant deux bras (75a) engagés respectivement dans les deux gorges (17) latérales de la masse (4) spongieuse.

19. Installation selon la revendication 17 ou 18, **caractérisée en ce que** chaque moyen (S) de support est agencé pour supporter deux masses (4) spongieuses côte à côte.

20. Utilisation d'une masse (4) spongieuse selon l'une quelconque des revendications 1 à 14, pour le traitement de fonds de récipients réalisés dans des installations à très grande cadence de production.

## Claims

1. Spongy mass (4) for treating the end walls of containers produced in facilities with very high production rates, said mass being suitable for being held in contact with the end wall (2) of a container (1) for a predetermined period in order to treat said end wall (2) of the container, with said mass:
- having a main face (14) for contact with the end wall (2) of the container,
- comprising blind grooves (15) which open onto said main face (14) but do not emerge on the opposite side, and which are distributed into two sets of mutually transverse grooves (15a, 15b) that delimit blocks (16); and
- being composed of a flexible reticulated foam with semi-open cells and high resilience, **characterized in that**
it is composed of polyurethane foam with a mass density between about 10 and 600 kg/m³.

2. Spongy mass (4) according to claim 1, **characterized in that** it is composed of polyurethane foam with a mass density of about 38 kg/m³.

3. Spongy mass (4) according to claim 1 or 2, **characterized in that** it is composed of polyurethane foam that is either polyether polyurethane foam or polyester polyurethane foam.

4. Spongy mass (4) according to any one of claims 1 to 3, **characterized in that** said grooves (15) have a depth between about 7 and 15 mm.

5. Spongy mass (4) according to claim 4, **characterized in that** said grooves (15) have a depth (h) of about 10 mm.

6. Spongy mass (4) according to claim 4, **characterized in that** said grooves (15) have a width of about 1 mm.

7. Spongy mass (4) according to any one of claims 1 to 6, **characterized in that** said grooves (15a, 15b) are mutually substantially parallel within each set, and **in that** the respective grooves (15a, 15b) of one set are substantially perpendicular to those of the other set.

8. Spongy mass (4) according to claim 7, **characterized in that** said blocks (16) have a substantially square shape measuring about 15 to 25 mm on each side.

9. Spongy mass (4) according to claim 8, **characterized in that** said blocks (16) measure about 19 mm on each side and said grooves (15) are spaced about 20 mm apart.

10. Spongy mass (4) according to any one of claims 1 to 9, **characterized in that** it has a substantially quadrangular general shape in a top view, and **in that** said grooves (15a, 15b) of the two sets are substantially parallel to its respective sides.

11. Spongy mass (4) according to claim 10, **characterized in that** it has a substantially square general shape in a top view.

12. Spongy mass (4) according to any one of claims 1 to 11, **characterized in that**, in two mutually opposite areas on the periphery of its portion underlying said grooves (15), it comprises two substantially parallel lateral scores (17) cut into the lateral wall (18) of said spongy mass (4) substantially perpendicularly to said grooves (15).

13. Spongy mass (4) according to any one of claims 1 to 12, **characterized in that** the main face (14) of the spongy mass (4) is substantially flat.

14. Spongy mass (4) according to any one of claims 1 to 12, **characterized in that** the main face (14) of the spongy mass (4) is, at least centrally, rounded relative to the shape of the end wall (2) of the containers.

15. System for treating an end wall (2) of at least one container (1) made of thermoplastic material, comprising:
- at least one spongy mass (4) having a predetermined quality, and
- support means (S) suitable for maintaining said spongy mass (4) in contact with said end wall (2) of at least one container (1) for a predetermined period,
**characterized in that** said spongy mass (4) is according to any one of claims 1 to 14.

16. System according to claim 15, **characterized in that** it comprises:
- conveyor means (44) for conveying the containers (1), which move in a substantially circular manner and advance the containers (1) along a substantially arc-shaped path (T) between a point of entry (LOAD) and a point of exit (UNLOAD),
- a plurality of spongy masses (4) supported one after the other,
- support means (S) for the respective spongy masses (4), arranged in a substantially circular manner and made to rotate on a circular path (U) substantially parallel and coaxial to the path (T) traveled by the end walls (2) of the containers (1),
- driving means suitable for mutually moving said conveyor means (44) for the containers (1) and/or said support means (S) for the spongy masses (4), such that the end walls (2) of the containers are in contact with the respective spongy masses (4) for at least a portion of said arc-shaped path (T) traveled by the containers (1), and
- means (56-60) of regenerating the predetermined quality of the spongy masses (4), arranged in the portion of said circular path (T) located between the point of exit (UNLOAD) and the point of entry (LOAD) of the containers (1) on said path (T).

17. System according to claim 16, **characterized in that** each support means (S) comprises a substantially flat base (61) perforated with holes (63), integral with transfer means, and a platen (64) for receiving at least one spongy mass (4), said platen (64) being removably attached to said base (61).

18. System according to claim 17, **characterized in that** the spongy mass (4) is arranged according to claim 13 and **in that** said platen (64) is at least partially in the form of a fork with two arms (75a) that are respectively inserted into the two lateral scores (17) in the spongy mass (4).

19. System according to claim 17 or 18, **characterized in that** each support means (S) is arranged to support two spongy masses (4) side by side.

20. Use of a spongy mass (4) according to any one of claims 1 to 14, for treating the end walls of containers produced in very high production rate facilities.

## Patentansprüche

1. Schwammartige Masse (4) zur Behandlung von Böden von Behältern, hergestellt in Produktionsanlagen mit sehr hohem Arbeitstakt, wobei die Masse geeignet ist, mit dem Boden (2) eines Behälters (1) über eine durch eine Behandlung des Bodens (2) des Behälters festgelegte Dauer in Kontakt gehalten zu werden und die Masse:
- eine Hauptkontaktfläche (14) für den Boden (2) des Behälters bereitstellt;
- begrenzte Nuten (15) aufweist, die sich zu der Hauptfläche (14) öffnen aber nicht in die Gegenseite münden und die in zwei zueinander senkrechten Nutsätzen (15a, 15b) angeordnet sind, die Blöcke (16) abgrenzen; und
- aus einem netzartigen nachgiebigen Schaumstoff aus halb geöffneten Zellen und mit erhöhter Elastizität gebildet ist;
**dadurch gekennzeichnet, dass** sie aus Polyurethan-Schaumstoff mit einem spezifischen Gewicht von in etwa 10 bis 600 kg/m³ gebildet ist.

2. Schwammartige Masse (4) gemäß Anspruch 1, **dadurch gekennzeichnet, dass** sie aus einem Polyurethan-Schaumstoff mit einem spezifischen Gewicht von in etwa 38 kg/m³ gebildet ist.

3. Schwammartige Masse (4) gemäß Anspruch 1 oder 2, **dadurch gekennzeichnet, dass** sie aus Polyurethan-Schaumstoff gebildet ist, ausgewählt aus Polyether-Polyurethan-Schaumstoff und Polyester-Polyurethan-Schaumstoff.

4. Schwammartige Masse (4) gemäß einem der Ansprüche 1 bis 3, **dadurch gekennzeichnet, dass** die Nuten (15) eine Tiefe von in etwa 7 bis 15 mm aufweisen.

5. Schwammartige Masse (4) gemäß Anspruch 4, **dadurch gekennzeichnet, dass** die Nuten (15) eine Tiefe (h) von in etwa 10 mm aufweisen.

6. Schwammartige Masse (4) gemäß Anspruch 4, **dadurch gekennzeichnet, dass** die Nuten (15) eine Breite von in etwa 1 mm aufweisen.

7. Schwammartige Masse (4) gemäß einem der Ansprüche 1 bis 6, **dadurch gekennzeichnet, dass** die Nuten (15a, 15b) eines jeden Satzes im Wesentlichen parallel zueinander sind und dass die Nuten (15a, 15b) der beiden Sätze jeweils im Wesentlichen senkrecht zueinander sind.

8. Schwammartige Masse (4) gemäß Anspruch 7, **dadurch gekennzeichnet, dass** die Blöcke (16) im Wesentlichen quadratisch mit einer Seitenlänge von in etwa 15 bis 25 mm sind.

9. Schwammartige Masse (4) gemäß Anspruch 8, **dadurch gekennzeichnet, dass** die Blöcke (16) in etwa eine Seitenlänge von 19 mm aufweisen und dass die Nuten (15) mit einer Teilung von in etwa 20 mm beabstandet sind.

10. Schwammartige Masse (4) gemäß einem der Ansprüche 1 bis 9, **dadurch gekennzeichnet, dass** sie in der Draufsicht im Wesentlichen eine viereckige Form aufweist und dass die Nuten (15a, 15b) der zwei Sätze jeweils zu ihren Seiten in etwa parallel sind.

11. Schwammartige Masse (4) gemäß Anspruch 10, **dadurch gekennzeichnet, dass** sie in der Draufsicht eine im Wesentlichen quadratische Form aufweist.

12. Schwammartige Masse (4) gemäß einem der Ansprüche 1 bis 11, **dadurch gekennzeichnet, dass** sie in zwei gegenüberliegenden Abschnitten ihres Umfangsbereichs unterhalb der Nuten (15) zwei seitliche in die Seitenwände der schwammartigen Masse (4) eingearbeitete im Wesentlichen parallele Vertiefungen (17) aufweist, die in etwa senkrecht zu den Nuten (15) sind.

13. Schwammartige Masse (4) gemäß einem der Ansprüche 1 bis 12, **dadurch gekennzeichnet, dass** die Hauptfläche (14) der schwammartigen Masse (4) in etwa plan ist.

14. Schwammartige Masse (4) gemäß einem der Ansprüche 1 bis 12, **dadurch gekennzeichnet, dass** die Hauptfläche (14) der schwammartigen Masse (4) zumindest im zentralen Bereich entsprechend der Form des Bodens (2) der Behälter gewölbt ist.

15. Vorrichtung zur Behandlung eines Bodens (2) mindestens eines Behälters (1) aus thermoplastischem Material mit:
- mindestens einer schwammartigen Masse (4), die eine festgelegte Qualität aufweist und
- ein Unterstützungsmittel (S), das geeignet ist, die schwammartige Masse (4) mit dem Boden (2) von mindestens einem Behälter (1) während eines festgelegten Zeitraums in Kontakt zu halten,
**dadurch gekennzeichnet, dass** die schwammartige Masse (4) gemäß einem der Ansprüche 1 bis 14 gebildet ist.

16. Vorrichtung gemäß Anspruch 15, **dadurch gekennzeichnet, dass** sie aufweist:
- ein Transportmittel (44) für die Behälter (1), das im Wesentlichen kreisförmig bewegbar ist und die Behälter (1) entsprechend einer Trajektorie (T) in etwa kreisbogenförmig zwischen einem Eingang (CH) und einem Ausgang (DCH) bewegt,
- eine Vielzahl von unterstützenden aufeinanderfolgenden schwammartigen Massen (4),
- ein Unterstützungsmittel (S) für die schwammartige Masse, das im Wesentlichen kreisförmig angeordnet ist und auf einer kreisförmigen Trajektorie (U) mit einer Drehbewegung mitgeführt wird, die in etwa parallel und koaxial zu der von den Böden (2) der Behälter (1) durchlaufenden Trajektorie (T) ist,
- ein Antriebsmittel, das geeignet ist, das Transportmittel (44) für die Behälter (1) und/oder das Unterstützungsmittel (S) der schwammartigen Massen (4) so zueinander zu bewegen, dass die Böden (2) der Behälter mit den schwammartigen Massen (4) in Kontakt gebracht werden und zwar auf zumindest einem Abschnitt der von den Behältern (1) durchlaufenden kreisbogenförmigen Trajektorie (T), und
- ein Regenerationsmittel (56-60) für die festgelegte Qualität der schwammartigen Massen (4), das auf der Trajektorie (T) in dem Abschnitt der kreisförmigen Trajektorie (T) angeordnet ist, der zwischen dem Ausgang (DCH) und dem Eingang (CH) der Behälter liegt.

17. Vorrichtung gemäß Anspruch 16, **dadurch gekennzeichnet, dass** jedes Unterstützungsmittel (S) ein mit Transfermitteln einstückige in etwa plane, perforierte Sitzfläche (61) und eine Aufnahmeplatte (64) für mindestens eine schwammartige Masse (4) aufweist, wobei die Platte (64) mit der Sitzfläche (61) lösbar verbunden ist.

18. Vorrichtung gemäß Anspruch 17, **dadurch gekennzeichnet, dass** die schwammartige Masse (4) gemäß Anspruch 13 gebildet ist und dass die Platte (64) zumindest abschnittsweise gabelförmig ist und zwar mit zwei Armen (75a), die jeweils in die zwei seitlichen Vertiefungen (17) der schwammartigen Masse (4) eingreifen.

19. Vorrichtung gemäß Anspruch 17 oder 18, **dadurch gekennzeichnet, dass** jedes Unterstützungsmittel (S) gebildet ist, um zwei schwammartige Masse (4) Seite an Seite zu unterstützen.

20. Verwendung einer schwammartigen Masse (4) gemäß einem der Ansprüche 1 bis 14 zur Behandlung von Böden von Behältern, die in Produktionsanlagen mit sehr hohem Arbeitstakt hergestellt werden.
